# EUROPEAN PATENT SPECIFICATION

(11) **EP 2 049 369 B1**
(45) Date of publication and mention of the grant of the patent: **05.06.2019**
(21) Application number: 06831874.0
(22) Date of filing: 01.08.2006
(51) Int. Cl.: B60R 21/01, H04L 7/06

(54) **DATA COMMUNICATION SYSTEM AND METHOD**
DATENKOMMUNIKATIONSVERFAHREN UND -SYSTEM
SYSTÈME ET PROCÉDÉ DE COMMUNICATION DE DONNÉES

(43) Date of publication of application: 22.04.2009
(73) Proprietor: NXP USA, Inc., Austin TX 78735 (US)
(72) Inventor: MARTY-BLAVIER, Arlette, 31600 Seysses (FR); LANCE, Philippe, 31000 Toulouse (FR); ROLLAND, Eric, 31190 Grepiac (FR)
(74) Representative: Bradler, Carola Romana
(86) International application number: PCT/IB2006/054086
(87) International publication number: WO 2008/015498

(56) References cited:
- US-A- 4 907 222
- US-A1- 2006 080 495
- US-B1- 6 246 734
- US-B1- 6 310 408
- US-B1- 6 587 532

## Description

### Field of the invention

This invention relates to a data communication system. The invention further relates to a central control unit. The invention also relates to a data processing unit, and to a vehicle. The invention further relates to a method for communicating data. The invention further relates to a computer program product.

### Background of the invention

From United States Patent Application Publication US 2006/0080495, a data communication system is known. The data communication system has a central control unit, decentralized data processing units and a data connection between the central control unit and the decentralized data processing units. During the transmission, in order to request data packets, the central control unit periodically outputs synchronization pulses over the data connection to the data processing unit interface, whereupon the decentralized data processing unit transmits data packets to the central control unit. The decentralized data processing unit generates an electrical discharge pulse after the synchronization pulse but before the transmission of a first data packet, thereby counteracting an electrical charging of the data processing unit interface by the synchronization pulse.

However, the duration of the electrical discharge pulse has to be sufficiently long to take into account possible mismatches in timing between the central control units and the decentralized data processing units. Since the power consumption of the system is determined, inter alia, by the duration of this pulse, a disadvantage of the data communication system described in this Patent Application Publication is therefore that the electrical discharge pulse consumes a significant amount of power.

US 6,310,408 B1 describes a data transmission method and a data transmission system, including a central station and satellite station. The central station and the satellite station are connected via a data transmission line for transmitting data between the central and the satellite station. The data transmission line is used for data transmission and power supply. The central station includes a current generator with low-pass filter characteristics feedback, for regulating the quiescent voltage on the data transmission line. The current generator includes an output that is connected to the data transmission line for supplying power to the satellite station. The current generator is regulated by a voltage amplifier of which an input is connected to the data transmission line for receiving a voltage reference signal, and if which an output is coupled to the input of the current generator.

### Summary of the invention

In accordance with a first aspect of the present invention a data communication system as described in the accompanying claims is provided.

In accordance with a second aspect of the present invention a central control unit is provided.

In accordance with a third aspect of the present invention a data processing unit is provided.

In accordance with a fourth aspect of the present invention an occupant protection system is provided.

In accordance with a fifth aspect of the present invention a vehicle is provided.

In accordance with a sixth aspect of the present invention a method for communicating data is provided.

In accordance with a seventh aspect of the present invention a computer program product is provided.

Specific embodiments of the invention are set forth in the dependent claims.

These and other aspects of the invention will be apparent from and elucidated with reference to the examples of embodiments described hereinafter

### Brief description of the drawings

Further details, aspects and embodiments of the invention will be described, by way of example only, with reference to the attached drawings.
Figure 1 schematically shows a block diagram of an example of an embodiment of a data communication system in accordance with the invention.
Figure 2 schematically shows examples of graphs of signals that may be transmitted by the example of fig. 1.
Figure 3 schematically shows a circuit diagram of an example of an embodiment of a central control unit in accordance with the invention.
Figure 4 schematically shows a circuit diagram of an example of a synchronisation unit.
Figure 5 schematically shows a circuit diagram of an example of an embodiment of a data processing unit in accordance with the invention.
Figure 6 schematically shows a block diagram of an example of an embodiment of a restraint system in accordance with the invention.
Figure 7 schematically shows a top view of an example of a vehicle with a restraint system in accordance with the invention.

### Detailed description of the preferred embodiments

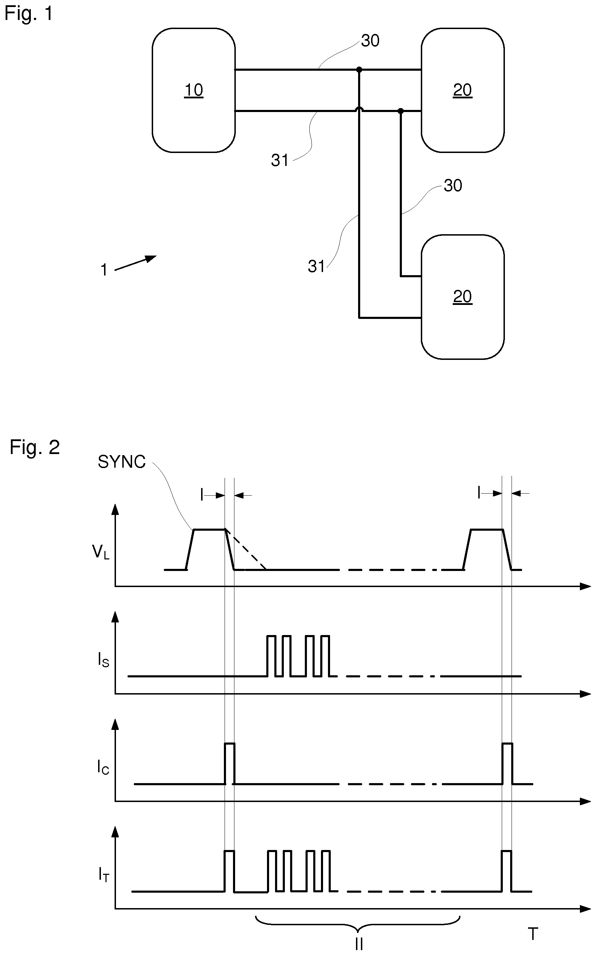

In fig. 1, an example of a data communication system 1 is shown. The data communication system 1 includes a central control unit 10 and one or more, in this example two, data processing units. The data communication system 1 further includes one or more data connections 30,31. The data connections 30,31 connect the data processing units 20 to the central control unit 10.

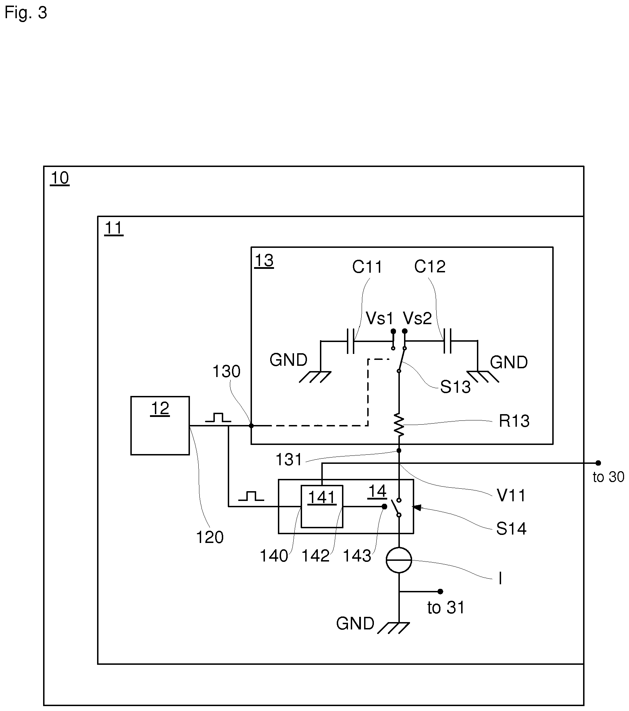

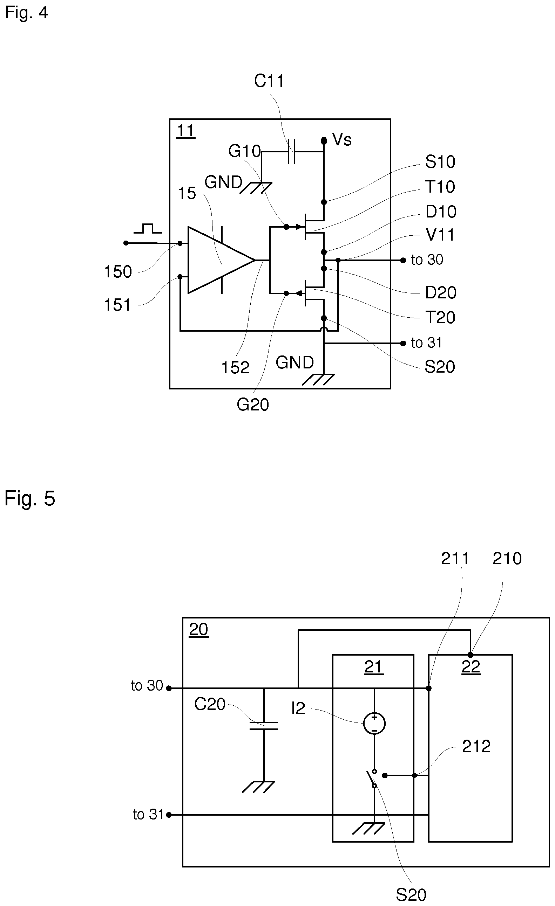

As shown in fig. 3 in more detail, the central control unit 10 may include a synchronisation unit 11. The synchronisation unit 11 may output via the data connection 30,31 an electric synchronisation signal to one or more of the data processing units 20. By means of the synchronisation signal, the time base of the data processing units 20 is synchronised. As shown in fig. 5 in more detail, the data processing unit 20 includes a data generator 22. The data generator 22 can generate data and transmit, after the synchronisation signal, the data to the central control unit 10, for example in order to transmit information obtained by a sensor or other suitable information to the central control unit 10.

The synchronisation signal may affect the data connection 30,31. More in particular, the data connections 30,31 may, as in the example of fig. 1, include electrical connections and the synchronisation signal may be an electrical signal, such as a change in voltage, in which case the data connection and/or the interface of the data processing unit receiving the signal will be in a non-steady state during transmission of the synchronisation signal.

For instance, in case the synchronisation signal is a voltage signal, such as a voltage pulse, the voltage of the data connection 30,31 will deviate from the steady state voltage during transmission of the synchronisation signal. Due to the voltage of the synchronisation signal, the data connection 30,31 and/or the respective interfaces between the data connection 30,31 and the data processing units 20 will be charged by the synchronisation signal. Accordingly, after the central control unit 10 has terminated the transmission of the synchronisation signal, the charge on the data connection 30,31 delays the return of the voltage of the data connection to the steady-state level. Thereby, synchronization of the data processing units 20 may be affected, since the termination of the synchronisation signal data cannot be determined accurately by the data processing units 20. Furthermore, when the voltage of the data connection 30,31 is not at the steady state level the transmission of the data from the data processing units may be affected. Accordingly, the period of time available for transmission of data from the data processing units to the central control unit is reduced by the charging of the data connection. The synchronisation signal may, for example, charge capacitances in the data connection 30,31 or in the data processing units 20. In the circuit diagram shown in fig. 5, for instance, the capacitive elements are represented, for illustrative purposes, by a separate capacitor C20. However, the capacitance may also be an integral part of, for example, the data connection 30 or the data processing unit 20 and not be present as a separate element but for example caused by inherent, parasitic, capacitances.

As shown in the example of fig. 3, the central control unit 10 may include a discharge signal generator 14. The discharge signal generator 14 can output a discharge signal via the data connection 30,31 to the data processing unit 20. The discharge signal discharges the data connection 30,31 and/or the interface of the respective data processing unit(s) 20 connected to the data connection 30,31 over which the discharge signal is sent, thereby accelerating a return to steady state of the data connection 30,31. Accordingly, a smaller margin of time before starting the transmission may be used and the period of time available for transmission of the data from the data processing units to the central control unit may be increased. Furthermore, the discharge signal is sent from the central control unit 10 to the data processing units 20, accordingly the need to account for timing mismatches is obviated and the discharge signal may have a shorter duration. Thereby, the amount of power consumed by the transmission of the discharge signal can be reduced. The discharge signal may for example be a current which unloads capacitive elements in the data connection or in the data processing units 20. For example, the synchronisation signal may be a voltage pulse and the discharge signal may be a current pulse, as for example illustrated in fig. 2.

Fig. 2 schematically illustrates an example of the development (as a function of time) of the voltage V_{L} of the data connection 30, the current Iₛ transmitted from the data processing unit 20, the current I_{c} transmitted from the central control unit 10 and the total current Iₜ flowing through the data connection 30. As shown in fig. 2, the synchronisation unit 11 may output a synchronisation signal SYNC to the data processing units 20 connected to the data connection 30,31. The synchronisation signal may, for example, be outputted periodically, such as after a period of time above 0.1 milliseconds and below 1 millisecond, such as 0.5 milliseconds or less, for instance every 0.25 milliseconds. In the example of fig. 2, the synchronisation signal is a voltage pulse superimposed on a DC voltage level. The DC voltage may for example be a DC offset voltage suitable to supply power to the data processing units 20. For illustrative purposes, the synchronisation signal is exaggerated in fig. 2. The voltage for the DC offset voltage may for example be in the range from 5 to 7 volts, such as 6 volts for instance. The voltage of the synchronisation signal may for example be a voltage about the same or slightly less than the DC offset voltage superimposed on the DC offset voltage. The combined voltage of the synchronisation signal and the DC offset voltage may for example be in the range from 10 to 12 volts, such as 11 volts. However, other voltages may also be used.

As shown in fig. 2 with the dashed line, without discharging signal, the return of the voltage of the data connection 30 to the DC offset level after the synchronisation signal has been sent, would be delayed due to the charging of the data connection 30. The synchronisation unit 11 in the central control unit 10 enables a current to flow, during a period of time denoted with I in fig. 2, through the data connection 30 when the synchronisation signal starts to decay, thereby discharging the data connection 31 and facilitating the return of the voltage level of the data connection 31 to the steady state voltage level. After the voltage of the data connection 31 has returned to the steady state voltage level, the respective data processing unit 20 transmits data, during a period of time denoted with II in fig. 2, to the central control unit 10 by transmitting one or more binary signals over the data connection 30. In this example, the binary signal is formed by a current pulse. The current pulse and/or the synchronisation signal may for example be a current which flows from the data processing unit 20 to the central control unit 10 or vice versa.

The central control unit 10 may be implemented in any manner suitable for the specific implementation. An example of an embodiment of a central control unit 1 is shown in fig. 3. The central control unit 10 may, as shown in fig. 3, include a synchronisation control unit 11. The synchronisation control unit 11 may for example include a timer 12, a synchronisation signal generator 13 and the discharge signal generator 14.

In the example of fig. 3, the synchronisation signal generator 13 is connected with a signal generator input 130 to a clock signal output 120 of the timer 12. The synchronisation signal generator 13 is further connected with a generator output 131 to the data connection 30. In this example, the timer 12 periodically outputs a pulsed clock signal. Based on the clock signal received from the timer 12, the synchronisation signal generator 13 outputs a synchronisation signal. The discharge signal generator unit 14 may, as shown in the example of fig. 3, be connected with a discharge signal generator input 140 to the timer output 12, in order to trigger the generation of the discharge signal.

The synchronisation signal generator 13 may be implemented in any manner suitable for the specific implementation. The synchronisation signal generator 13 may, as for example shown in fig. 3, include two or more different voltage supplies Vs1,Vs2 which are at different voltages, and a switch S13 which can connect a selected voltage supply to the generator output 131. In the example of fig. 3, for instance, the switch S13 is connected with a first contact at a first switch side to the low voltage supply Vs1 and with a second contact at the first switch side to the high voltage supply Vs2. (For illustrative purposes, the voltage supplies Vs1,Vs2 are shown in fig. 3 connected to ground GND via respective capacitors C11,C12.) The high voltage supply Vs2 is at a higher voltage than the low voltage supply Vs1. A contact at a second side of the switch S13, opposite to the first switch side, is connected to the generator output 131, in this example via a resistor R13. Depending on the state of the switch S13, the first contact or the second contact is electrically connected to the contact at the opposite side, and hence either the first voltage supply Vs1 or the second voltage supply Vs2 is connected to the contact at the second side of the switch, and hence to the signal generator output 131. The state of the switch S13 is controlled by the clock signal inputted at the signal generator input 130. In case the clock signal is low, the low voltage supply Vs1 is connected to the generator output 131. In case the clock signal is high, the high voltage supply Vs2 is connected to the generator output 131. Hence, the voltage of the signal generator output 131 is controlled by the clock signal. As illustrated in fig. 3, the inputted signal may have a pulsed shape, and accordingly, the voltage of the signal generator output 131 may change in a pulsed manner.

The discharge signal generator 14 may be implemented in any manner suitable for the specific implementation. For instance, as shown in fig. 3, the discharge signal generator 14 may include a switch S14 which connects the data connection 30 to ground GND, for example, via a current source I. The discharge signal generator 14 further has a switch control 141 which can receive the clock signal via the discharge signal generator input 140. The switch control 141 closes the switch S14 in response to the clock signal via a switch control input 143. The closed switch S14 allows the current source I to draw current from the data connection 30 and hence discharging the data connection 30. However, the discharge signal generator 14 may also be implemented in a different manner, and for example include a current source which can be switched on and off and which draws a current from the data connection 30.

The operation of the discharge signal generator 14 may be coordinated with respect to the operation of the synchronisation signal generator 13. For example the switch S14 in the discharge signal generator 14 may be closed in response to switching of the synchronisation signal generator 13 from the high voltage supply Vs2 to the low voltage supply Vs1. Thereby, the data connection 30 may be discharged a short period of time after the transmission of the synchronisation signal.

The synchronisation unit 11 may, as for example shown in fig. 4, include a sensor for sensing a parameter of the data connection 30,31 and/or the data processing unit 20. As shown in fig. 4, the data connection 30 may for example be connected to a sensor input 151, to sense a parameter of the data connection 30. The sensor may for example include a voltage sensor which can sense the voltage of the data connection 30.

The synchronisation unit 11 may for instance include a circuit in which the sensor, and/or the synchronisation signal generator and/or the discharge signal generator are combined. The signal generator 11 may, as shown in fig. 4, for instance include a comparing unit 15. As shown in fig. 4, a first comparing unit input 150 of the comparing unit 15 may be connected to a reference source (not shown in fig. 4) which provides a reference signal representing the desired output voltage of the synchronisation unit 11. At the first comparing unit input 150 a pulsed reference signal may be inputted, for example with pulses at regular time intervals. A second comparing unit input 151 of the comparing unit 15 may be connected with a feedback loop to the data connection 30, thus forming a sensor.

The comparing unit 15 may for example include a comparator which is connected with a first input to a signal source which provides a reference signal and which is connected with a second input to the data connection 30 and outputs a binary signal, e.g. either a positive signal or a negative signal with a constant amplitude. The comparator may for example output the positive signal in case the voltage at the first input is higher than the voltage at the second input and output the negative signal in case the voltage at the first input is lower than the voltage at the second input. In such case, in case the voltage of the data connection 30 exceeds the reference signal, the negative signal is outputted by the comparator and in case the voltage of the data connection 30 is lower than the reference signal, the positive signal is outputted by the comparator. Accordingly, outputting of the synchronisation signal and the discharging signal can be controlled.

The synchronisation unit 11 may output the discharge signal based on the sensed parameter. As shown in the example of fig. 4, the comparing unit 15 may for instance control an output stage of the synchronisation unit 11 based on the sensed parameter. In the example of fig. 4, the output stage includes a push-pull output stage. The control inputs of the push-pull stage are formed by the control terminals G10 and G20 of transistors T10,T20. The transistors T10,T20 connect the data connection 30 to a power supply Vs and to ground, respectively. The transistors T10,T20 are connected to each other with respective terminals D10 resp. D20 at a node V11 which is also connected to the data connection 30. A terminal S10 of a respective transistor T10 is connected to the power supply Vs and a terminal S20 of a respective transistor T20 is connected to ground. In the example of fig. 4, an output 152 of the comparing unit 15 is connected to control inputs G10,G20 of the output stage of the synchronisation unit 11. The output signal of the comparing unit 15 controls the output stage, and hence the voltage and/or current of the data connection 30.

The transistors T10,T20 of the push-pull output stage may for example be operated in active mode. With the signal presented at the comparing unit output 152, the control terminals G10,G20 of the transistors T10,T20 can be controlled, and accordingly the voltage drop between an input terminal S10, D20 and an output terminal D10,S20 of a respective transistor T10, T20 can be regulated, as well as the current flowing between the input terminals and the output terminals. Thereby the voltage of the data connection 30 can be controlled, as well as the current flowing from the data connection 30 to ground GND via the transistor T20.

In the example of fig. 5, the transistors T10,T20 are connected such that they form a push-pull regulator. In case the output of the comparing unit 15 increases, the voltage drop over the first transistor T10 decreases and the voltage drop over the second transistor T20 increases, and hence the voltage of the data connection 30 increases. In case the output of the comparing unit 15 decreases, the voltage drop over the first transistor T10 increases and the voltage drop over the second transistor T20 decreases. Hence the voltage of the data connection decreases. Furthermore, in case the comparing unit output decreases, the current through the second transistor T20 increases, and hence the data connection 30 can be discharged. Hence, the comparing unit output controls the synchronisation signal and the discharge signal simultaneously.

The synchronisation unit 11 may for example be arranged to control the magnitude of the discharge signal and/or the synchronisation signal based on a sensed parameter, e.g. the sensed voltage, of the data connection 30. The amplitude may for example be controlled to be linearly or non-linearly dependent on the difference. The comparing unit 15 may for example include a differential amplifier which is connected with a positive input to a signal source which provides a reference signal and which is connected with a negative input to the data connection 30. Thereby, the amplitude of the signal outputted by the comparing unit 15 (which may be used to control the push-pull stage, as shown in the example) may be proportional to the difference between the amplitude of the reference signal and the voltage of the data connection 30. In the example of fig. 4, by means of the second comparing unit input 151, the voltage at the first data connection 30 can be sensed by the comparing unit 15, and the comparing unit 15 may hence be regarded as sensor. In this example, the comparing unit 15 senses the voltage of the data connection 30, which is fed back to the comparing unit input 151 via a feedback line. The comparing unit 15 compares the sensed voltage with a reference voltage inputted at the first inputs 150 and outputs a signal which is proportional to the difference between the sensed voltage and the reference voltage. The output signal of the comparing unit 15 is inputted to the control terminals G10, G20 of the push-pull output stage and thereby the synchronisation signal and the discharge signal are controlled together and simultaneous. Thereby, a more accurate control of the discharge signal may be obtained and the duration and or magnitude of the discharge signal may be reduced.

In the example of fig. 4, the voltage of the data connection 30 and the current flowing from the data connection to ground GND are controlled as a function of the voltage on the data connection 30 (and, in this example, the reference voltage). Thereby, the data connection may be discharged in a controlled manner and in short period of time, since the need to account for possible differences in voltage and/or duration of the synchronisation signal is obviated. In case, for example, the sensed voltage is below the reference voltage, the comparing unit 15 will control the control terminals G10,G20 to increase the voltage drop between the node V11 and ground GND and to decrease the voltage drop from the power supply Vs to the node V11. (For example by increasing the conductance from one terminal D10 to another terminal S10 and/or decreasing the conductance between the node V11 and ground GND) In case, for example the sensed voltage is above the reference voltage, the comparing unit 15 will control the control terminals G10,G20 to decrease the voltage drop between the node V11 and ground GND (for example by increasing the conductance from one terminal D20 to another terminal S20 and/or decreasing the conductance between the voltage supply Vs and the node V11 and hence allowing more current to flow from the data connection 30 to ground GND). The control will further increase the voltage drop from the power supply Vs to the node V11.

Fig. 5 schematically shows an example of a data processing unit 20, which may be used in the example of fig. 1. The data processing unit 20 may, as shown in fig. 5, include a sensor 22 which generates data to be transmitted to the central control unit 10.

The data connections 30,31 may, as explained above, be electrical connections. For example, a data connection 30 may be set to a high voltage and the other data connection 31 may be set to a low voltage, that is: a voltage lower than the high voltage. In the example of fig. 1, for instance a data connection 31 acts as ground (e.g. is set to zero volts) whereas the other data connection is set to a suitable supply voltage. Thereby electrical power can be supplied to the data processing units 20,21 over the same line as used to transmit the data. As shown in fig. 5, the data connection 30 may for instance be set to a high voltage and connected to a power supply contact 210 of the sensor 22 as well as to a signal input 211 thereof.

The data processing unit 20 may include more than one sensor. However, the data processing unit 20 may include one or more other sources of data, and the invention is not limited to application in sensor systems. The sensor 22 may for instance include an acceleration sensitive sensor, such as an acceleration or deceleration sensor which may be used in an occupant protection system in a vehicle, such as a motor vehicle. However, other types of sensor may be used, such as for instance a pressure sensor, a temperature sensor which can detect, for instance, a temperature increase in a cavity which is compressed during an accident, such as the space inside the door of a motor vehicle.

The data processing unit 20 may include a data transmitter 21, which in the example of fig. 5 includes a current source I2 and a controllable switch S20. The switch S20 can alternately enable and inhibit the flow of current from data connection 30, via source 12, in this example to ground. The state of the switch is controlled via a switch control input 212 which is connected to the sensor 22. By alternately opening and closing the switch, the current through the data connection 30 can be controlled, and hence a current signal be transmitted to the central control unit 10.

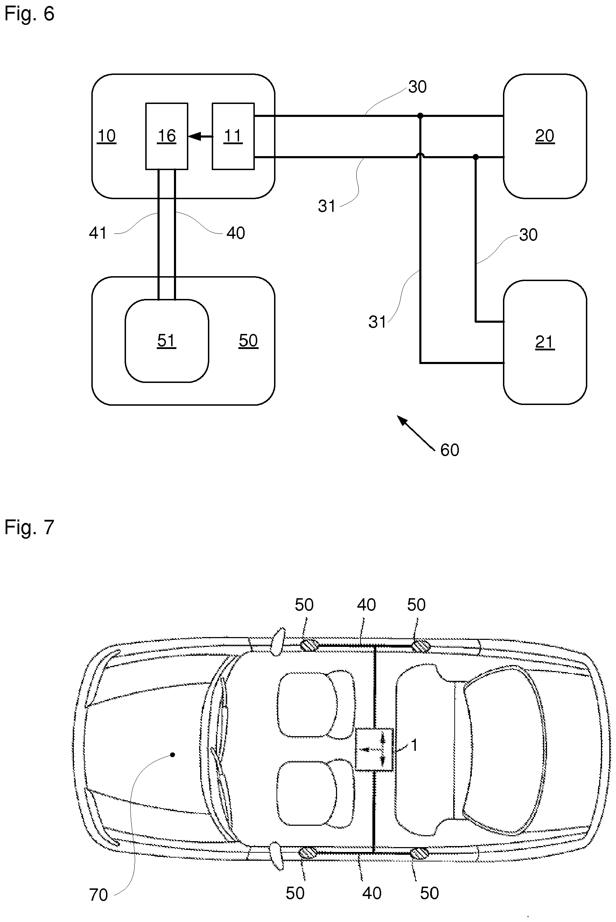

A data communication system in accordance with the invention, such as the example of a data communication system 1 shown in fig. 1, may for example be used in an occupant protection system. The occupant protection system may for instance include a restraint system or other suitable type of protection system. A restraint system generally refers to a system designed to hold a person within the body of a vehicle and limit movement during a crash, thereby reducing severity of injury. The occupant protection system may for example include a data communication system in accordance with the invention, such as the example shown in fig. 1, and one or more actuators connected to the central control unit 10 to actuate a restraint device. The restraint device may for example include an airbag, a seat belt pre-tensioning device or other restraint device. Fig. 6 schematically shows an example of a restraint system 60. The restraint system 60 includes a restraint device 50, and an actuator 51. The actuator 51 is connected to the central control unit 10. The central control 10 may transmit an activation signal to the actuator 51, which may for example be an airbag actuator. The actuator may actuate the restraint device 50 in response to the activation signal. For example, if the data processing unit 20 includes an acceleration sensor, the central control unit, in case the sensor or sensors senses an acceleration above a predetermined activation threshold, the central control unit 10 may transmit the activation signal. In response to the activation signal, the actuator 51 may then activate the restraint device 50, e.g. the airbag 50. In the example of fig. 5, only one restraint device 50 and actuator 51 are shown. However, the system 60 may include more than one restraint device 50 and more than one actuator 51, which may be controlled separately by the central control unit 10.

Fig. 7 shows an example of vehicle 70 provided with an occupant protection system. The example shown in fig. 7 includes restraint devices, 50, in this example airbags, connected via a suitable data connection 40,41 to a data communication system 1, for instance the example shown in fig. 6. As explained with reference to figure 5, the central control unit 10 may be arranged to control the actuator 51 based on data received from the data processing unit 20 and control actuation of the inflation of the airbags, thus protection the occupants of the vehicle 70 against impact, for example during a crash.

In the foregoing specification, the invention has been described with reference to specific examples of embodiments of the invention. It will, however, be evident that various modifications and changes may be made therein without departing from the broader spirit and scope of the invention as set forth in the appended claims. For instance, the data processing units 20 may share the connection, e.g. the data connections 30,31, to the central control unit 10. Thereby, the central control unit can send the same synchronisation signal to the data processing units 20 simultaneously. In the example of fig. 1, as mentioned, the data processing units 20 are connected to the central control unit 10 via a bus-connection. As shown in the example of fig. 1, for instance, the data connections 30,31 may form a bus connection between the central control unit 10 and the, decentralized, data processing units 20. The bus connection may for example be a parallel bus or a serial bus. However, other types of connections are also possible, such as for example a point-to-point connection in which each data processing unit 20 is connected by a separate connection to the central control unit 10.

Also, in the example of fig. 4, the transistors T10,T20 are drawn as field effect transistors, of which the gate G10,G20 is used as a control terminal and the sources S10,S20 and drains D10,D20 are connected to the data connection 30, voltage supply and ground respectively and form respective signal terminals. However, other types of transistors, such as bipolar transistors, may be used and be connected in a different manner to control the current drawn from the data connection and to control the voltage of the data connection.

Also, the invention is not limited to physical devices or units implemented in non-programmable hardware but can also be applied in programmable devices or units able to perform the desired device functions by operating in accordance with suitable program code. The invention may also be implemented in a computer program for running on a computer system, at least including code portions for performing steps of a method according to the invention when run on a programmable apparatus, such as a computer system or enabling a programmable apparatus to perform functions of a device or system according to the invention. Such a computer program may be provided on a data carrier, such as a CD-ROM or diskette, stored with data loadable in a memory of a computer system, the data representing the computer program. The data carrier may further be a data connection , such as a telephone cable or a wireless connection.

The central control unit 10 and/or the data processing unit 20 may be provided separately. It is also possible to provide a kit of parts, e.g. a central control unit 10 and one or more data processing units 20 which can be assembled into a data communication system 1, such as for instance into the example of a system shown in figure 1.

Furthermore, the devices may be physically distributed over a number of apparatuses, while functionally operating as a single device. For example, the central control unit 10 may be implemented as an arrangement of discrete components connected to each other to operate as the central control unit 10. Also, devices functionally forming separate devices may be integrated in a single physical device. For example, the electrical circuit shown in fig. 3 can be implemented in a single integrated circuit.

However, other modifications, variations and alternatives are also possible. The specifications and drawings are, accordingly, to be regarded in an illustrative rather than in a restrictive sense.

In the claims, any reference signs placed between parentheses shall not be construed as limiting the claim. The word 'comprising' does not exclude the presence of other elements or steps then those listed in a claim. Furthermore, the words 'a' and 'an' shall not be construed as limited to 'only one', but instead are used to mean 'at least one', and do not exclude a plurality. The mere fact that certain measures are recited in mutually different claims does not indicate that a combination of these measures cannot be used to advantage.

## Claims

1. A data communication system, including:
at least one data processing unit (20);
at least one central control unit (10);
at least one data connection (30,31) connecting said data processing unit (20) to said central control unit (10);
said central control unit (10) including a synchronisation unit (11) for outputting via said data connection (30,31) an electric synchronisation signal to said data processing unit (20);
said data processing unit (20) including a data generator (22) for generating data and transmitting, after said electric synchronisation signal, data to said central control unit (10);
**characterised in that**
said central control unit (10) further includes a discharge signal generator (14) for outputting a discharge signal via said data connection (30,31) to said data processing unit (20), and
the synchronization unit (11) comprises a synchronization signal generator (13) wherein, the discharge signal generator (14) is connected to the synchronization signal generator (13) via a switch (S14).

2. A data communication system as claimed in claim 1, wherein said central control unit (10) further includes;
a sensor for sensing a parameter of said data connection (30,31) and/or said data processing unit (20), and
a signal generator control unit connected to said sensor and said discharge signal generator, for controlling outputting said discharge signal based on said sensed parameter.

3. A data communication system as claimed in claim 2, wherein said sensor includes a voltage sensor for sensing the voltage of said data connection (30,31) and said signal generator control unit is connected to controls the discharge signal generator to output the discharge signal in relationship with the sensed voltage.

4. A data communication system as claimed in any one of claims 2-3 wherein the signal generator control unit is connected to control the discharge signal based on a difference between a value of the sensed parameter and a reference value.

5. A data communication system as claimed in any one of claims 2-4, including a circuit in which at least two of said sensor, said discharge signal generator and the synchronisation signal generator are combined.

6. A data communication system as claimed in any one of claims 1-4, wherein said data processing unit (20) includes at least one sensor.

7. A data communication system as claimed in claim 6, wherein said sensor includes an acceleration sensitive sensor and/or a pressure sensor.

8. A data communication system as claimed in any one of claims 1-7, wherein said synchronisation signal includes a voltage signal.

9. An occupant protection system, including a data communication system as claimed in any one of claims 1-8 and at least one occupant protection device connected to a central control unit (10), wherein said central control unit (10) is arranged to control said occupant protection device based on data received from a data processing unit (20).

10. A vehicle including an occupant protection system as claimed in claim 9.

## Patentansprüche

1. Ein Datenkommunikation System, beinhaltend:
mindestens eine Datenverarbeitung Einheit (20);
mindestens eine zentrale Steuereinheit (10);
mindestens eine Datenverbindung (30, 31), die die Datenverarbeitung Einheit (20) mit der zentralen Steuereinheit (10) verbindet;
wobei die zentrale Steuereinheit (10) eine Synchronisationseinheit (11) zum Ausgeben eines elektrischen Synchronisationssignals über die Datenverbindung (30, 31) an die Datenverarbeitung Einheit (20) beinhaltet;
wobei die Datenverarbeitung Einheit (20) einen Datenerzeuger (22) zum Erzeugen von Daten und zum Übertragen von Daten an die zentrale Steuereinheit nach dem elektrischen Synchronisationssignal beinhaltet;
**dadurch gekennzeichnet, dass**
die zentrale Steuereinheit (10) ferner einen Entladungssignal Erzeuger (14) zum Ausgeben eines Entladungssignals über die Datenverbindung (30, 31) an die Datenverarbeitung Einheit (20) beinhaltet, und
die Synchronisationseinheit (11) einen Synchronisationssignal Erzeuger (13) aufweist, wobei der Entladungssignal Erzeuger (14) über einen Schalter (S14) mit dem Synchronisationssignal Erzeuger (13) verbunden ist.

2. Ein Datenkommunikation System gemäß Anspruch 1, wobei die zentrale Steuereinheit (10) ferner beinhaltet:
einen Sensor zum Abtasten eines Parameters der Datenverbindung (30, 31) und/oder der Datenverarbeitung Einheit (20) und
eine Signalerzeuger Steuereinheit, die mit dem Sensor und dem Entladungssignal Erzeuger verbunden ist, zum Steuern des Ausgebens des Entladungssignals basierend auf dem abgetasteten Parameter.

3. Ein Datenkommunikation System gemäß Anspruch 2, wobei der Sensor einen Spannungssensor zum Abtasten der Spannung der Datenverbindung (30, 31) beinhaltet und die Signalerzeuger Steuereinheit verbunden ist, um den Entladungssignal Erzeuger zu steuern, das Entladungssignal in Beziehung zu der abgetasteten Spannung auszugeben.

4. Ein Datenkommunikation System gemäß einem der Ansprüche 2 bis 3, wobei die Signalerzeuger Steuereinheit verbunden ist, um das Entladungssignal basierend auf einer Differenz zwischen einem Wert des abgetasteten Parameters und einem Referenzwert zu steuern.

5. Ein Datenkommunikation System gemäß einem der Ansprüche 2 bis 4, beinhaltend eine Schaltung, in der mindestens zwei von dem Sensor, dem Entladungssignal Erzeuger und dem Synchronisationssignal Erzeuger kombiniert sind.

6. Ein Datenkommunikation System gemäß einem der Ansprüche 1 bis 4, wobei die Datenverarbeitung Einheit (20) mindestens einen Sensor beinhaltet.

7. Ein Datenkommunikation System gemäß Anspruch 6, wobei der Sensor einen beschleunigungsempfindlichen Sensor und/oder einen Drucksensor beinhaltet.

8. Ein Datenkommunikation System gemäß einem der Ansprüche 1 bis 7, wobei das Synchronisationssignal ein Spannungssignal beinhaltet.

9. Ein Insassenschutz System, beinhaltend ein Datenkommunikation System gemäß einem der Ansprüche 1 bis 8 und mindestens eine Insassenschutz Vorrichtung, die mit einer zentralen Steuereinheit (10) verbunden ist, wobei die zentrale Steuereinheit (10) eingerichtet ist, die Insassenschutz Vorrichtung basierend auf Daten, die von einer Datenverarbeitung Einheit (20) empfangen werden, zu steuern.

10. Ein Fahrzeug beinhaltend ein Insassenschutz System gemäß Anspruch 9.

## Revendications

1. Système de communication de données, comprenant :
au moins une unité de traitement de données (20) ;
au moins une unité de commande centrale (10) ;
au moins une connexion de données (30, 31) reliant ladite unité de traitement de données (20) à ladite unité de commande centrale (10) ;
ladite unité de commande centrale (10) comprenant une unité de synchronisation (11) pour délivrer en sortie, par l'intermédiaire de ladite connexion de données (30, 31), un signal de synchronisation électrique à ladite unité de traitement de données (20) ;
ladite unité de traitement de données (20) comprenant un générateur de données (22) pour générer des données et transmettre, après ledit signal de synchronisation électrique, des données à ladite unité de commande centrale (10) ;
**caractérisé en ce que**
ladite unité de commande centrale (10) comprend en outre un générateur de signal de décharge (14) pour délivrer en sortie un signal de décharge, par l'intermédiaire de ladite connexion de données (30, 31), à ladite unité de traitement de données (20), et
l'unité de synchronisation (11) comprend un générateur de signal de synchronisation (13) où le générateur de signal de décharge (14) est connecté au générateur de signal de synchronisation (13) par l'intermédiaire d'un commutateur (S14).

2. Système de communication de données tel que revendiqué dans la revendication 1, dans lequel ladite unité de commande centrale (10) comprend en outre ;
un capteur pour détecter un paramètre de ladite connexion de données (30, 31) et/ou de ladite unité de traitement de données (20), et
une unité de commande de générateur de signal connectée audit capteur et audit générateur de signal de décharge, pour commander la sortie dudit signal de décharge sur la base dudit paramètre détecté.

3. Système de communication de données tel que revendiqué dans la revendication 2, dans lequel ledit capteur comprend un capteur de tension pour détecter la tension de ladite connexion de données (30, 31) et ladite unité de commande de générateur de signal est connectée pour commander le générateur de signal de décharge pour délivrer en sortie le signal de décharge en relation avec la tension détectée.

4. Système de communication de données tel que revendiqué dans l'une quelconque des revendications 2 et 3, dans lequel l'unité de commande de générateur de signal est connectée pour commander le signal de décharge sur la base d'une différence entre une valeur du paramètre détecté et une valeur de référence.

5. Système de communication de données tel que revendiqué dans l'une quelconque des revendications 2 à 4, comprenant un circuit dans lequel au moins deux dispositifs parmi ledit capteur, ledit générateur de signal de décharge et le générateur de signal de synchronisation sont combinés.

6. Système de communication de données tel que revendiqué dans l'une quelconque des revendications 1 à 4, dans lequel ladite unité de traitement de données (20) comprend au moins un capteur.

7. Système de communication de données tel que revendiqué dans la revendication 6, dans lequel ledit capteur comprend un capteur sensible à l'accélération et/ou un capteur de pression.

8. Système de communication de données tel que revendiqué dans l'une quelconque des revendications 1 à 7, dans lequel ledit signal de synchronisation comprend un signal de tension.

9. Système de protection d'occupant, comprenant un système de communication de données tel que revendiqué dans l'une quelconque des revendications 1 à 8 et au moins un dispositif de protection d'occupant connecté à une unité de commande centrale (10), où ladite unité de commande centrale (10) est agencée pour commander ledit dispositif de protection d'occupant sur la base des données reçues d'une unité de traitement de données (20).

10. Véhicule comprenant un système de protection d'occupant tel que revendiqué dans la revendication 9.
